# FASCICULE DE BREVET EUROPEEN

(11) **EP 1 644 298 B1**
(45) Date de publication et mention de la délivrance du brevet: **14.02.2007**
(21) Numéro de dépôt: 04767478.3
(22) Date de dépôt: 25.06.2004
(51) Int. Cl.: C04B 11/05, C01F 11/46

(54) **PROCEDE DE PREPARATION D ANHYDRITE III STABILISE A PARTIR DE PLATRE ET LIANT HYDRAULIQUE OBTENU**
VERFAHREN ZUR HERSTELLUNG VON STABILISIERTEM ANHYDRIT III AUS GIPS UND SO ERHALTENES HYDRAULISCHES BINDEMITTEL
METHOD OF PREPARING STABILISED ANHYDRITE III FROM PLASTER AND, HYDRAULIC BINDER THUS OBTAINED

(30) Priorité: 26.06.2003 FR 0307716
(43) Date de publication de la demande: 12.04.2006
(73) Titulaire: Couturier, Jean, 06400 Cannes (FR); BROENS & PARTNERS SCS, 98-000 Monaco (MC)
(72) Inventeur: Couturier, Jean, 06400 Cannes (FR)
(74) Mandataire: Schuffenecker, Thierry
(86) Numéro de dépôt international: PCT/FR2004/001632
(87) Numéro de publication internationale: WO 2005/000766

(56) Documents cités:
- EP-A- 0 447 800
- WO-A-00/47531
- WO-A-97/30004
- FR-A- 2 276 276
- FR-A- 2 767 816
- FR-A- 2 804 423
- FR-A- 2 836 913
- GB-A- 2 011 363
- US-A- 4 080 422

## Description

La présente invention concerne un nouveau procédé de préparation d'anhydrite III stabilisé de sulfate de calcium par traitement thermique d'une matière pulvérulente et un nouveau liant hydraulique obtenu.

Dans la structure cristalline monoclinique du sulfate de calcium dihydraté, les molécules d'eau sont liées à deux atomes d'oxygène de deux tétraèdres d'ions SO₄ différents et à un atome de calcium. A l'échelle moléculaire, elle présente une structure en feuillets en couches parallèles, structure dans laquelle alterne une couche d'eau et deux couches de CaSO4. Les molécules d'eau représentent une proportion pondérale de 26,2 % de la structure cristalline. Le gypse contient, en outre, des molécules d'eau superficielles (ci-après appelé "eau liquide") dont la quantité dépend du taux d'humidité du gypse concerné.

Le plâtre traditionnel s'obtient par déshydratation partielle du gypse (CaSO₄, 2H₂O) en hémihydrate ou bassanite (CaSO₄, ½H₂O). Son utilisation sous forme d'enduit nécessite une réhydratation de la poudre de hémihydrate.

Les plâtres courants du commerce sont des plâtres β obtenus par cuisson de gypse à une température inférieure à 200°C, en général de 110 à 140 °C, à la pression atmosphérique, puis broyage. Ils sont constitués d'hémihydrate β broyés de formule CaSO₄.0,5H₂O qui représente une proportion pondérale de 5,5 % de molécules d'eau dans la structure cristalline (ci-après appelé "eau solide"). Dans les plâtres β courants du commerce, l'hémihydrate β peut être accompagné d'anhydrite soluble de formule CaSO₄, εH₂O et d'anhydrite surcuite CaSO₄ mais en faible proportion, notamment inférieure à 20%.

On sait préparer des plâtres améliorés (désignés parfois par « plâtres α »). Ces hémihydrates α sont obtenus par cuisson à des pressions supérieures à la pression atmosphérique. Ils présentent des caractéristiques mécaniques plus élevées que celles des plâtres courants. Les phénomènes qui se déroulent au cours des traitements sont mal connus et l'on attribue généralement l'amélioration des performances mécaniques à la présence de la variété cristallographique α dans les produits obtenus, sans que l'on connaisse exactement la proportion de cette variété dans ces produits ni les conditions qui permettent de l'obtenir de façon stable et reproductible.

Une déshydratation plus poussée du gypse conduit à la transformation du hémihydrate en des phases de moins en moins hydratées que sont l'anhydrite III encore dénommé anhydrite soluble, puis l'anhydrite II ou β encore dénommé anhydrite insoluble.

L'anhydrite III peut être représenté par la formule (CaSO₄, εH₂O) avec e = 0,06 à 0,11 selon les données de la littérature technique les plus récentes et les plus communément admises, étant entendu que le nombre de moles d'eau a pu être controversé dans la littérature technique.

L'anhydrite III constitue une phase métastable extrêmement hygroscopique et possède donc une cinétique de réhydratation très grande. Il se réhydrate spontanément en hémihydrate en fonction de l'hygrométrie de l'air. On n'obtient donc jamais 100 % d'anhydrite III, celui-ci étant toujours en association avec des composés comprenant parmi eux majoritairement de la bassanite (hémihydrate).

On connaît des procédés de traitement thermique de gypse ou dihydrate de sulfate de calcium, permettant d'obtenir de l'anhydrite III stabilisé afin de limiter sa réhydratation spontanée qui comprend essentiellement deux étapes suivantes :
a) Tout d'abord, une étape de séchage puis de déshydratation du gypse par augmentation de température pour former l'anhydrite III. Cette déshydratation doit permettre de sécher l'humidité superficielle du gypse, et éliminer les deux molécules d'eau de cristallisation.
b) Puis, une trempe thermique afin de stabiliser cette phase métastable.

La stabilisation de l'anhydrite III bloque l'évolution de l'anhydrite III vers d'autres formes cristallographiques et empêche sa réhydratation spontanée.

L'anhydrite III stabilisé possède des propriétés très intéressantes, telle qu'une très haute résistance mécanique et une faible conductivité thermique et acoustique.

La teneur en anhydrite III stabilisé est fonction du procédé de traitement thermique. Ainsi, on sait que la température de chauffage, le temps de cuisson et la granulométrie du gypse de départ sont déterminants.

Il est connu dans WO96 33957, un procédé de traitement thermique de matière pulvérulente à base de sulfate de calcium dihydraté dans lequel on réalise une étape de cuisson qui porte la température du gypse traité à une température comprise entre 220 et 360°C, selon les caractéristiques du gypse traité et une opération de trempe thermique mise en oeuvre de façon à amener la matière chauffée par la cuisson à une température inférieure à 100°C en un temps compris entre 6 et 12 minutes. Ce refroidissement étant réalisé au moyen d'air froid et sec injecté sous pression au coeur de la matière. Néanmoins, ce procédé ne permet pas d'obtenir une proportion d'anhydrite III stabilisé très élevé.

Ce procédé ne permet pas de transformer plus de 65% du dihydrate de sulfate de calcium contenu dans le produit de départ, en anhydrite III stabilisé.

Dans FR 2 767 816 on a décrit un procédé permettant de transformer plus de 70% de l'hydrate de sulfate de calcium en anhydrite III stable dans lequel on réalise une trempe thermique plus rapide en abaissant la température à moins de 80°C, de préférence entre 40 et 50°C, en moins de deux minutes afin de stabiliser l'anhydrite III en plus grande proportion. Ce procédé permet en effet d'obtenir un produit contenant plus de 70%, voire plus de 90% d'anhydrite III stabilisé par rapport au poids total des composés provenant de la transformation de l'hydrate de sulfate de calcium contenu dans le produit de départ. Ce produit présente en outre une surface spécifique plus élevée (environ 7 m²/g) et des propriétés de résistance mécanique améliorée par rapport aux compositions à teneur moins élevée décrite dans le précédent brevet WO96 33957. Ainsi, le rendement maximal obtenu à partir de gypse naturel (Vieujot) est supérieur à 90% pour des conditions expérimentales de cuisson à 340°C pendant quarante minutes avec une granulométrie de 315-400 microns ou seulement 300°C avec une granulométrie de 80-100 microns.

En pratique, on met en oeuvre, dans ces procédés de préparation d'anhydrite III stable, comme matière de départ une matière pulvérulente à base d'hydrate de sulfate de calcium (CaSO₄, 2H₂O), tel que du gypse naturel ou du gypse de synthèse, notamment du sulfogypse, du phosphogypse, du borogypse ou du titanogypse.

Toutefois, ces gypses doivent être broyés pour que leur granulométrie ne dépasse pas 120 microns, voire 100 microns de préférence.

Dans le brevet FR 2 804 423 il est décrit une installation industrielle et un procédé permettant d'obtenir de l'anhydrite III stabilisé, produit dans des conditions industrielles, comprenant au moins 85%, de préférence au moins 90%, de préférence encore au moins 95% en poids d'anhydrite III stabilisé par rapport au poids total des composés provenant de la transformation de l'hydrate de sulfate de calcium contenu dans le produit de départ.

Dans FR 2 804 423, l'inventeur a mis en évidence le problème posé par les installations industrielles antérieures, lequel tient en ce que durant la phase de refroidissement la matière peut être maintenue en contact avec une proportion trop importante d'air humide pouvant entraîner une réhydratation spontanée de l'anhydrite III avant sa stabilisation.

Le procédé décrit dans FR 2 804 423, permet de réduire la présence d'air humide durant la phase de refroidissement ou trempe thermique et ce afin que l'anhydrite III ne se transforme pas en hémihydrate pendant sa stabilisation et aussi de réduire le contact de l'anhydrite III formé avec l'humidité dans l'air pendant l'étape de cuisson et jusqu'à l'achèvement de l'étape de refroidissement.

Pour ce faire, dans FR 2 804 423, on a décrit un procédé de production industrielle d'anhydrite III stabilisé, par traitement thermique d'une matière pulvérulente à base d'hydrate de sulfate de calcium (CaSO₄, 2H₂O), tel que du gypse naturel ou de synthèse, dans une installation industrielle qui comprend d'amont en aval :
1) un réacteur de déshydratation par chauffage, et
2) un réacteur de refroidissement,
3) une zone de passage entre l'extrémité aval dudit réacteur de déshydratation et l'extrémité amont dudit réacteur de refroidissement,
procédé qui comprend les étapes successives dans lesquelles :
a) on chauffe dans ledit réacteur de déshydratation (1) ladite matière pulvérulente à une température comprise entre 220°C et 360°C de manière à transformer l'hydrate de sulfate de calcium en anhydrite soluble III ou α, et
b) on fait subir à ladite matière ainsi transformée une trempe thermique dans ledit réacteur de refroidissement (2) de manière à abaisser sa température d'au moins 150°C pour atteindre une température au moins inférieure à 110°C, de préférence inférieure à 80°C, de préférence encore en moins de deux minutes, de façon à obtenir de l'anhydrite III stabilisé.

Durant l'étape de cuisson a), le dihydrate de sulfate de calcium chauffé perd (26,2-e)% d'eau de cristallisation (ou "eau solide"), ainsi que l'eau de surface (ou "eau liquide").

Selon ledit procédé décrit dans FR 2 804 423, on réduit le taux d'humidité dans l'atmosphère ambiante en contact avec ladite matière transformée en anhydrite III obtenu à l'étape a), et ce, avant et pendant l'étape b), en aspirant l'atmosphère ambiante en contact avec ladite matière transformée, avec des moyens d'aspiration situés à proximité, de préférence juste en amont, de la dite zone de passage, à l'extrémité aval dudit réacteur de déshydratation, et en envoyant un flux de gaz froid et sec, de préférence de l'air, sur ladite matière transformée, à contre-sens par rapport au déplacement de ladite matière, dans ladite zone de passage entre l'étape a) et l'étape b), et dans ledit réacteur de déshydratation pendant l'étape b).

Ainsi, la matière déshydratée à l'étape a) ne risque pas de se réhydrater avant de réaliser l'étape b).

Avantageusement encore, on envoie un flux de gaz froid et sec sur ladite matière transformée à contre-sens par rapport au déplacement de ladite matière pendant l'étape b), et ledit flux de gaz sec à contre-sens est évacué avec l'atmosphère humide de l'étape a). Ainsi on évite que l'air chaud humide dégagé à l'étape a) ne soit refoulé en amont du réacteur de l'étape a) et ne soit en contact avec ladite matière avant que celle-ci ne soit complètement chauffée, ce qui augmenterait le taux d'humidité de ladite matière et affecterait le rendement de l'étape a).

L'air sec est injecté à une pression étudiée permettant de refouler l'air sous faible pression afin de ne pas gêner le déplacement du gypse vers la sortie du réacteur.

Ce procédé requiert la mise en oeuvre d'une installation industrielle de traitement thermique d'une matière première pulvérulente à base d'hydrate de sulfate de calcium en vue d'obtenir de l'anhydrite III stabilisé, comprenant d'amont en avant :
a) un réacteur de déshydratation par chauffage et,
b) un réacteur de refroidissement,
caractérisé en ce que l'installation comprend
- des moyens d'aspiration du gaz contenu dans ledit réacteur de déshydratation, situés à proximité, de préférence juste en amont de ladite zone de passage, à l'extrémité aval dudit réacteur de déshydratation, et
- des moyens d'injection de gaz sec à contre-sens du déplacement de ladite matière, de préférence d'air, de sorte que la zone de passage entre extrémité aval (1₂) dudit réacteur de déshydratation et l'extrémité amont dudit réacteur de refroidissement est parcouru par ledit courant de gaz sec à contre-sens du déplacement de ladite matière, et
- des moyens d'injection de gaz froid et sec à contre-sens du déplacement de ladite matière, situés dans ledit réacteur de refroidissement, de préférence à l'extrémité aval dudit réacteur de refroidissement, de sorte que le gaz parcourt tout le réacteur de refroidissement d'aval en amont.

Plus particulièrement, lesdits moyens d'injections de gaz sec sont situés en aval desdits moyens d'aspiration, de préférence en aval dudit réacteur de refroidissement et ledit gaz sec injecté est aspiré par lesdits moyens d'aspiration situés en amont de ladite zone de passage, de préférence dans ledit réacteur de déshydratation.

Les expériences réalisées montrent que l'étape de pré-séchage du gypse pour ramener la teneur en eau libre à un taux inférieur de préférence à 3%, les gypses naturels ayant une teneur en eau libre qui varie de 4 à 10% et les gypses industriels ayant des teneurs en eau libre de 10 à 60%, est très importante car cette teneur en eau libre est néfaste au bon démarrage de la cuisson à bonne déshydratation de l'eau moléculaire cristalline. On observe néanmoins qu'une partie du produit est entraînée par la vapeur d'eau lors de son évaporation d'une part, et, d'autre pat, que des grains de gypse collent entre eux et contre les parois du réacteur de déshydratation provoquant des colmatages, ces deux phénomènes affectant négativement les rendements de la réaction.

Le but de la présente invention est de fournir un procédé de préparation d'anhydrite III stabilisée plus simple et moins coûteux à réaliser, notamment en terme d'installation industrielle.

Un autre but de la présente invention est de fournir un procédé de préparation d'anhydrite III stabilisé avec un meilleur rendement et fournissant une proportion pondérale en anhydrite III stabilisé, de préférence d'au moins 90%, de préférence au moins 95%, voire au moins 98% dans le produit obtenu et de meilleure qualité, notamment en terme de propriété mécanique, et tel que les résistances à la compression (Rc) et à la flexion (Rf).

L'inventeur a maintenant découvert de façon surprenante qu'il était possible d'obtenir la production industrielle d'anhydrite III stabilisé en proportion importante et de meilleure qualité, en terme de propriété mécanique, notamment résistances à la compression (Rc) et à la flexion (Rf) en utilisant, comme matière pulvérulente de départ, de l'hémihydrate β broyé ou plâtre β courant du commerce, de granulométrie inférieure à 200 microns, de préférence inférieure à 150, voire inférieure à 100 microns, c'est-à-dire à un plâtre β courant du commerce, et en réalisant les mêmes étapes successives de cuisson et trempe thermique sans, toutefois, nécessiter d'étape de pré-séchage dans la mesure où le plâtre β du commerce est lui-même sec, ni d'étape de pré-broyage dans la mesure où l'on met en oeuvre un plâtre β broyé de granulométrie appropriée.

La présente invention a donc pour objet un procédé de préparation d'anhydrite III stabilisé de sulfate de calcium de formule, dans lequel on réalise les étapes successives suivantes de :
a) chauffage d'une matière de départ pulvérulente à une température comprise entre 220°C et 320°C, de manière à former de l'anhydrite soluble III ou α, et
b) on fait subir à ladite matière ainsi transformée une trempe thermique, de manière à abaisser sa température d'au moins 150°C pur atteindre une température au moins inférieure à 100°C, de préférence inférieure à 80°C, en moins de 2 minutes, de préférence en moins de 20 secondes, de façon à obtenir dudit anhydrite III stabilisé,
procédé caractérisé en ce que ladite matière pulvérulente de départ est broyée à une granulométrie inférieure à 200 µm et de préférence inférieure à 150 µm et comprend majoritairement de l'hémihydrate de sulfate de calcium (CaSO₄, 0,5H₂O).

De préférence, ladite matière pulvérulente de départ broyée est constituée par du plâtre β comprenant, de préférence, au moins 95 % d'hémihydrate β de sulfate de calcium.

De préférence encore, ladite matière pulvérulente de départ consiste en un composé d'hémihydrate β de sulfate de calcium broyé.

On peut toutefois utiliser, comme dite matière pulvérulente de départ broyée, une matière constituée majoritairement par du plâtre α, de préférence constitué par du plâtre α comprenant au moins 95 % d'hémihydrate α de sulfate de calcium.

Le procédé selon l'invention est avantageux à plusieurs titres. Tout d'abord, il permet d'obtenir un produit comprenant une teneur élevée de 85 à 95%, en poids, d'anhydrite III stabilisé, le reste des constituants étant constitué majoritairement d'hémihydrate β. En second lieu, le rendement de la réaction est plus important car on observe plus de collage de la matière pulvérulente sur les parois du réacteur de cuisson et il y a moins de perte de produit lors de l'évaporation de la vapeur d'eau.

En outre, le procédé selon l'invention peut être mis en oeuvre dans une installation thermique simplifiée ne nécessitant pas la mise en oeuvre de moyens d'évacuation d'humidité, tels que ceux mis en oeuvre dans les procédés industriels antérieurs de production d'anhydrite III stabilisé décrits ci-dessus, et le traitement thermique est plus rapide. Au total, le procédé et l'installation thermique simplifiée permettent de réaliser des économies d'énergie et d'investissement de matériels considérables.

Dans un mode de réalisation particulier, les deux étapes du procédé selon l'invention peuvent être réalisées successivement dans le même réacteur, notamment un réacteur à double enveloppe, la cuisson et le refroidissement étant alors obtenus par circulation d'un fluide chaud ou froid respectivement dans la double enveloppe.

Le résultat du procédé selon l'invention est surprenant car il n'avait pas été mis en évidence, dans les procédés antérieurs, que le passage gypse à l'anhydrite III se faisait par une étape intermédiaire de transformation de tout le gypse en hémihydrate, et les mécanismes complexes de la déshydratation de l'eau cristalline ne permettait pas de supposer que le changement de la forme cristalline de la matière pulvérulente de départ permettrait d'obtenir de l'anhydrite III stabilisé répondant aux mêmes caractéristiques que ceux obtenus à partir du traitement thermique de gypse.

Il faut, en effet, rappeler que la température de cuisson et le temps de chauffage tels que déterminés dans les brevets antérieurs, s'appuyaient sur une méthodologie de plan d'expérience basée sur une approche mathématique et statistique dite "théorie du réseau uniforme DOHELERT" qui permettait de limiter, puis de fixer la température et le temps de cuisson par un nombre limité de manipulations à partir d'un polynôme écrit en variables codées adimentionnelles. D'autre part, il faut indiquer que la déshydration du gypse n'est pas régulière avec l'augmentation de la température et que les phases d'évacuation de l'eau libre de surface et de l'eau cristalline de déshydratation et l'eau libre de surface résiduelle sont considérées comme concomitantes et inter agissant l'une sur l'autre, alors que le plâtre broyé est un produit sans « eau liquide ».

Dans un mode préféré de réalisation du procédé selon l'invention, on utilise comme matière pulvérulente de départ, du plâtre β chaud broyé après sortie du réacteur de fabrication du plâtre β à partir de gypse, c'est-à-dire un plâtre β à une température de 110 à 140 °C. Bien évidemment, le changement de matière première de départ se traduit par une diminution du temps de durée de l'étape de cuisson d'environ 50% par rapport à un procédé impliquant comme matière de départ du gypse naturel ou synthétique. Dans ce mode de réalisation, on peut donc prévoir des installations mixtes simplifiées produisant à la fois du plâtre et un liant sulfatique à base d'anhydrite III stabilisé, obtenu à partir du plâtre, ce qui permet d'améliorer les conditions économiques d'exploitation et de fabrication desdits produits.

Dans le procédé selon l'invention, lorsque l'on utilise du plâtre β courant du commerce, celui-ci présente une granulométrie homogénéisée de 0 à 150 microns, de préférence de 0 à 100 microns, garantie et sec, ce qui explique aussi en partie le meilleur rendement du procédé selon l'invention par rapport à un procédé dans lequel la matière pulvérulente de départ est du gypse car les cristaux de gypse présente une granulométrie et des formes cristallographiques de plus grande hétérogénéité et, dès lors, l'hémihydrate formé en cours de cuisson se trouve, non seulement, dans une atmosphère plus humide, mais aussi, sous une granulométrie moins homogénéisée, ce qui nuit à la fois au rendement de la réaction et à la qualité du liant et de l'anhydrite III qu'il contient obtenus.

Avantageusement, selon une variante de réalisation, ladite matière pulvérulente de départ provient d'un traitement thermique de gypse naturel ou synthétique, et présente une température initiale, avant l'étape a) de cuisson, de 100 à 150°C, de préférence 110 à 140°C. Ce nouveau procédé permet donc aussi aux plâtriers, de réaliser de l'anhydrite III stabilisé par une modification peu onéreuse de leur installation actuelle et, donc, fournit un nouveau procédé industriel économique sachant que l'addition de gypcement dans du plâtre apporte une très nette amélioration des caractéristiques mécaniques.

Selon une autre variante de réalisation, ladite matière pulvérulente de départ est à température inférieure à 100°C, de préférence à température ambiante.

Un autre avantage du procédé selon la présente invention est que, dans l'étape de chauffage de la matière pulvérulente de départ contenant majoritairement de l'hémihydrate β de sulfate de calcium, on peut obtenir l'anhydrite III à une température de 220 à 320°C beaucoup plus facilement et beaucoup plus rapidement par chauffage par contact direct avec un gaz chaud, notamment de l'air chaud, de préférence ladite matière pulvérulente de départ étant transportée à co-courant et chauffée par ledit gaz chaud sous forme de lit fluidisé.

Plus particulièrement, on réalise le chauffage à l'aide d'un dispositif de flash thermique annulaire comportant une colonne de séchage à air chaud dans laquelle l'air chaud est apte à transporter à co-courant et chauffer ladite matière pulvérulente le long d'une rampe hélicoïdale.

Les essais réalisés par les inventeurs ont permis de mettre en évidence qu'en réalisant le procédé dans les mêmes conditions d'installation industrielle, en changeant la matière de départ constituée à partir du gypse pré-séché et broyé d'une part, et d'autre part, du plâtre β de même granulométrie, on peut augmenter la proportion pondérale d'anhydrate III ou α stabilisé obtenu dans une proportion significative.

Le procédé selon l'invention permet d'obtenir de l'anhydrite III stabilisé produit dans une installation industrielle et présentant un taux de pureté d'au moins 90% en poids, de préférence au moins 95%, voire 98 % par rapport au poids total des composés provenant de la transformation de l'hydrate de sulfate de calcium de la matière de départ.

Des teneurs aussi élevées n'ont pas été obtenues dans les procédés de traitement décrits antérieurement.

Plus particulièrement, l'anhydrite III stabilisé, obtenu selon la présente invention, est associé à une faible teneur d'hémihydrate de sulfate de calcium (ou bassanite), de sorte que le rapport pondéral du hémihydrate à l'anhydrite III stabilisé est inférieur à 10/90, de préférence inférieur à 9/91, de préférence encore inférieur à 5/95.

Dans le cas où le produit de départ comprend au moins 95%, de préférence au moins 98% de dihydrate de sulfate de calcium, on peut obtenir de l'anhydrite III stabilisé avec un taux de pureté qui représente au moins 90%, de préférence encore au moins 95% par rapport au poids total du produit obtenu.

Le plâtre broyé étant un produit sans "eau liquide" et présentant une plus grande homogénéité de granulométrie ainsi que cristallographique, notamment en termes de forme des cristaux, que le gypse industriel ou synthétique, l'anhydrite III stabilisé obtenu présente une meilleure qualité en termes d'homogénéité granulométrique et cristallographique avec des cristaux de forme plus épaisse et plus courte que les cristaux d'anhydrite III stabilisé obtenus à partir de traitement thermique de gypse selon la technique antérieure.

Il en résulte que les liants hydrauliques selon l'invention présentent des propriétés mécaniques de résistance à la compression améliorées.

La présente invention a donc également pour objet un liant hydraulique comprenant de l'anhydrite III stabilisé obtenu par le procédé selon l'invention.

Plus particulièrement, un liant hydraulique de la présente invention comprend plus de 95%, voire 98% d'anhydrite III stabilisé en poids.

Plus particulièrement encore, un liant hydraulique selon l'invention confère une résistance à la compression accrue, notamment Rc d'au moins 45 MPa, de préférence au moins 50 MPa à 28 jours dans l'air selon les essais réalisés selon la norme EN-196.1.

Plus particulièrement, le liant selon l'invention comprend des additifs de charges minérales choisies parmi les laitiers, cendres volantes, pouzzolane, fumées de silice, fines calcaires, chaux et sous-produits et déchets industriels de nature minérale ou organique.

La présente invention a également pour objet des matériaux formulés à partir d'un liant selon l'invention, de préférence sous forme de mortier, béton, enduit ou coulis, notamment utiles pour la fabrication ou la réalisation de panneaux, briques, parpaings et chappes. D'autres caractéristiques et avantages de la présente invention apparaîtront plus clairement à la lumière des exemples détaillés de réalisation qui va suivre.

### Exemple 1 comparatif :

On cuit dans un four du type rotatif à double enveloppe, à chauffage indirect à l'aide d'un fluide chaud circulant dans la double enveloppe, 1000 Kg de gypse industriel broyé dit sulfo-gypse, de granulométrie 0 - 100 µm, pré-séché de manière à présenter une teneur en humidité, après pré-séchage, inférieure ou égale à 3%, contenant au moins 98% de dihydrate de sulfate de calcium et 2% d'impuretés (MgO, chlorure, Na₂O,SO₂,_{....}). On effectue la cuisson jusqu'à une température de 230 °C, cette température étant atteinte en 40 minutes.

On réalise ensuite une trempe thermique en abaissant la température à 80 °C, en 4 secondes. Cette trempe thermique de refroidissement est réalisée dans un réacteur situé dans un cylindre tournant à double enveloppe refroidi avec de l'eau froide à moins de 20°C.

On obtient, in fine, 700 Kg de liant hydraulique contenant 70% à 80% d'anhydrite III stabilisé et 20 à 30% d'autres constituants, comprenant majoritairement de l'hémihydrate (environ 15 à 20 %) ainsi que des produits tels que MgO, chlorure, Na₂O et SO₂, etc....

Au cours du procédé, on observe une perte importante de produit et donc de rendement de transformation à cause, d'une part, du collage de grains de gypse entre eux et sur la surface du four tournant provoquant des colmatages et, d'autre part, du fait que du produit est entraîné avec la vapeur d'eau éliminée.

En outre, des conditions de réaction dans une atmosphère très humide nuisent à la stabilisation de l'anhydrite III et favorise sa transformation en hémihydrate.

### Exemple 2 selon l'invention :

On cuit dans un même four qu'à l'exemple 1, une même quantité de 1000 Kg de plâtre β sec courant du commerce notamment du type Lafarge Prestia Selecta® et présentant une même granulométrie de 0 à 100 µm que le produit de l'exemple 1. Ledit plâtre β sec utilisé contient au moins 98% d'hémihydrate β de sulfate de calcium et 2% de composés résiduels.

La même température de cuisson de 230 °C est obtenue en 10 minutes.

On réalise ultérieurement une trempe thermique dans les mêmes conditions qu'à l'exemple 1 et on obtient 920 Kg d'un liant hydraulique contenant 96% d'anhydrite III stabilisé.

On n'observe pas de phénomène de collage de grains entre eux ni sur les parois du réacteur de cuisson et l'absence d'atmosphère sur-saturée en humidité permet d'accroître le rendement en liant et anhydrite III stabilisé obtenu.

Le procédé, selon l'invention, d'obtention d'anhydrite III stabilisé par déshydratation à partir du plâtre donc d'un produit broyé selon une granulométrie homogène, apporte une amélioration à la qualité de l'anhydrite III en terme d'homogénéité de la forme cristallographique et la teneur pondérale en anhydrite III stabilisé (de 95 à 98% au lieu de 70 à 80% pour le produit de l'exemple I).

D'autre part, on réalise une économie d'énergie considérable avec un temps de cuisson passant de 40 minutes à 10 minutes.

Le traitement thermique selon l'invention peut être réalisé avec des installations existantes de fabrication de plâtre, limitant ainsi considérablement les investissements matériels.

On cuit dans un dispositif de flash thermique annulaire consistant en une colonne de séchage à air chaud explicité ci-après, une même quantité et une même qualité de plâtre β tel qu'à l'exemple 2, à la même température de cuisson de 230°C.

Cette étape de chauffage est réalisée en quelques secondes, notamment moins de 5 secondes.

La colonne de séchage comporte une rampe hélicoïdale apte à recevoir à sa base ladite matière pulvérulente, laquelle peut-être transportée à co-courant par du gaz chaud également injecté à la base de la rampe de la colonne, ladite matière pulvérulente étant transportée jusqu'en tête de colonne, au sommet de ladite rampe hélicoïdale.

Le dispositif de chauffage par flash thermique fonctionne plus précisément de la manière suivante :
- le produit à sécher est introduit à la base d'une colonne de séchage dans laquelle il est transporté à une vitesse de plus de 2m/s par l'air chauffé pulsé provenant d'un générateur de gaz chaud circulant à co-courant le long d'un trajet hélicoïdal au sein de ladite colonne, de sorte que le chauffage de la matière pulvérulente se trouvant sous forme de lit fluidisé se fait par contact direct du produit avec l'air chaud,
- le débit et la longueur de la colonne sont tels que, avec un air chaud envoyé à une température de 280 à 320°C, la matière pulvérulente arrive à une température de 230°C en tête de colonne.
- un air de chauffage secondaire provenant de cette même source de chaleur est introduit ponctuellement à différents niveaux sur toute la colonne, ce qui permet de :
   - sécher le produit en fonction de sa granulométrie en modifiant l'angle de la trajectoire hélicoïdale de la particule à sécher et donc son temps de séjour,
   - maintenir le potentiel énergétique tout au long de la colonne par des apports calorifiques.
      - Les éléments lourds sont récupérés à la base de la colonne et éventuellement évacués par une trappe.
- le produit est évacué en tête de la colonne où il est arrivé à la température de 230°C et séparé de l'air de transport et de séchage dans un cyclone et/ou un filtre.
- un ventilateur permet l'évacuation de cet air à l'atmosphère.
- le produit récupéré est lui-même évacué à la base du cyclone grâce à une écluse.

On réalise ultérieurement une trempe thermique dans les mêmes conditions que dans les exemples 1 et 2 et on obtient une même quantité et une même qualité de liant hydraulique contenant de l'anhydrite III stabilisé qu'à l'exemple 2.

On peut également réaliser la trempe thermique avec un dispositif de refroidissement à air froid dans une installation dans laquelle ladite matière pulvérulente se trouve sous forme de lit fluidisé.

L'avantage de ce système de chauffage par flash thermique annulaire est :
- le rendement thermique élevé ;
- la faible charge thermique ;
- le faible encombrement de l'installation ; et
- la rapidité du séchage.

### Exemple 4 : morphologique cristallographique :

Les liants hydrauliques obtenus aux exemples 2 et 3 selon l'invention ont été observés par microscopie électronique et microphotographiés.

Les cristaux d'anhydrite III stabilisé se trouvent sous forme de bâtonnets courts et épais de tailles plus homogènes que les cristaux d'anhydrite III stabilisé obtenus à partir de gypse conformément à l'exemple 1 dont les microphotographies montrent des cristaux de forme d'aiguilles plus fines et plus longues que les bâtonnets courts et épais des liants des exemples 2 et 3.

Exemple 5 : résistance à la compression :Des essais comparatifs de résistance à la compression ont également permis de démontrer les propriétés mécaniques avantageuses d'un liant hydraulique obtenu par le procédé selon l'invention.

Un liant selon l'exemple 1, ci-après appelé « Gypcement» et un liant selon les exemples 2 et 3 ci-après appelés « Hydrocim » ont été testés.

Les données ci-après rapportent les valeurs de Rc = résistance mécanique à la compression en MPa (méga Pascal) mesurées selon la norme EN-196.1 « méthode d'essai des ciments - partie I : détermination des résistances mécaniques ».

Liant Gypcement : Rc à 28 jours dans l'air = 40 MPa

Liant Hydrocim : Rc à 28 jours dans l'air = 47 MPa.
- le temps de prise du liant Hydrocim est légèrement inférieur à celui du Gypcement, soit environ 3-4 minutes pour l'Hydrocim au lieu de 4-5 minutes pour le Gypcement.

Des essais ont été également réalisés sur des mortiers comportant 35% de liant + 65% de sable normalisé EN 196.1 et préparés dans les conditions suivantes :
- malaxage à sec pendant 30 secondes,
- introduction de l'eau pendant 30 secondes en maintenant le malaxage à petite vitesse,
- le rapport eau/liant est fixé à 0,7,
- malaxage à petite vitesse pendant 90 secondes,
- mortier avec liant Gypcement : Rc à 28 jours dans l'air = 35 MPa,
- mortier avec Hydrocim : Rc à 28 jours dans l'air = 45 MPa,
- les temps de prise d'un mortier tel que décrit ci-dessus avec un liant Hydrocim sont de l'ordre de 10 à 15 minutes, au lieu de 12 à 17 minutes avec un liant Gypcement.

Les résistances à la flexion (Rf) mesurées selon la même norme sont du même ordre avec le liant Hydrocim qu'avec le liant Gypcement mais sont supérieures à celles obtenues avec les ciments, soit généralement de l'ordre de Rf = 1,5 x Rc.

Ces propriétés mécaniques élevées de résistance à la flexion confèrent au liant Hydrocim mortiers et des propriétés en comprenant des propriétés parasismiques.

## Revendications

1. Procédé de préparation d'anhydrite III stabilisé de sulfate de calcium, dans lequel on réalise les étapes successives suivantes de :
a) chauffage d'une matière de départ pulvérulente à une température comprise entre 220°C et 320°C, de manière à former de l'anhydrite soluble III, et
b) on fait subir à ladite matière ainsi transformée une trempe thermique, de manière à abaisser sa température d'au moins 150°C pour atteindre une température au moins inférieure à 100°C, de préférence inférieure à 80°C, en moins de 2 minutes, de préférence en moins de 20 secondes, de façon à obtenir dudit anhydrite III stabilisé,
procédé **caractérisé en ce que** ladite matière pulvérulente de départ est broyée à une granulométrie inférieure à 200 µm et de préférence inférieure à 150 µm et comprend majoritairement de l'hémihydrate de sulfate de calcium.

2. procédé selon la revendication 1, **caractérisé en ce que** ladite matière pulvérulente de départ broyée est constituée par du plâtre β comprenant, de préférence, au moins 95% d'hémihydrate β de sulfate de calcium.

3. Procédé selon la revendication 1, **caractérisé en ce que** ladite matière pulvérulente de départ broyée consiste en un composé d'hémihydrate β de sulfate de calcium.

4. Procédé selon l'une des revendications précédentes, **caractérisé en ce que** la granulométrie de la matière pulvérulente de départ est homogénéisée dans une fourchette de valeurs de 0 à 100 µm.

5. Procédé selon l'une des revendications 1 à 4, **caractérisé en ce que** ladite matière pulvérulente de départ provient d'un traitement thermique de gypse naturel ou synthétique, et présente une température initiale, avant l'étape a) de cuisson, de 100 à 150°C, de préférence 110 à 140°C.

6. Procédé selon l'une des revendications 1 à 4, **caractérisé en ce que** ladite matière pulvérulente de départ est à température inférieure à 100°C, de préférence à température ambiante.

7. Procédé selon l'une des revendications 1 à 6, **caractérisé en ce que** l'on réalise l'étape a de chauffage par contact direct avec un gaz chaud, notamment de l'air chaud, de préférence ladite matière pulvérulente de départ étant transportée à co-courant et chauffée par ledit gaz chaud sous forme de lit fluidisé.

8. Procédé selon la revendication 7, **caractérisé en ce que** l'on réalise l'étape a) de chauffage à l'aide d'un dispositif de flash thermique annulaire comportant une colonne de séchage à air chaud dans laquelle l'ait chaud est apte à transporter à co-courant et chauffer ladite matière pulvérulente le long d'une rampe hélicoïdale.

9. Procédé selon l'une des revendications 1 à 6, **caractérisé en ce que** les deux étapes a) et b) sont réalisées dans un même réacteur, de préférence à double enveloppe.

10. Liant hydraulique comprenant de l'anhydrite III stabilisé obtenu par le procédé selon l'une des revendications 1 à 9

11. Liant hydraulique selon la revendication 10, **caractérisé en ce qu'**il comprend plus de 95% voire 98% d'anhydrite III stabilisé, en poids.

12. Liant hydraulique selon l'une des revendications **10** à **11, caractérisé en ce qu'**il comprend en outre des additifs de charge minérale choisis parmi les laitiers, cendres volantes, pouzzolane, fumées de silice, fines calcaires et chaux et des sous-produits et déchets industriels de nature minérale ou organique.

13. Matériau formulé à partir d'un liant selon l'une des revendications **10** à **12,** de préférence sous forme de béton, mortier, enduit ou coulis.

## Claims

1. Process for preparation of stabilised anhydrite III of calcium sulphate, in which the following steps arc carried out in sequence:
a) heat an initial powder material to a temperature of between 220°C and 320°C so as to form soluble anhydrite TTT, and
b) thermally quench said material thus transformed so as to lower its temperature by at least 150°C to reach a temperature of less than 100°C at most, and preferably less than 80°C, in less than 2 minutes, preferably in less than 20 seconds, so as to obtain the said stabilised anhydrite III,
process **characterised in that** the said initial powder material is ground to a size grading of less than 200 µm and preferably less than 150 µm and comprises mostly calcium sulphate hemihydrate.

2. Process according to claim 1, **characterised in that** said initial ground powder material is composed of β plaster preferably comprising at least 95% of β calcium sulphate hemihydrate.

3. Process according to claim 1, **characterised in that** said initial ground powder material consists of a β calcium sulphate hemihydrate compound.

4. Process according to one of the previous claims, **characterised in that** the size grading of the initial powder material is homogenised within values ranging from 0 to 100 µm.

5. Process according to one of claims 1 to 4, **characterised in that** said initial powder material originates from a heat treatment of natural or synthetic gypsum, and its initial temperature before the baking step a) is between 100 and 150°C, preferably between 110 and 140°C.

6. Process according to one of claims 1 to 4, **characterised in that** said initial powder material is at a temperature of less than 100°C, and is preferably at room temperature.

7. Process according to any one of claims 1 to 6, **characterised in that** the heating step a) is done by direct contact with a hot gas, particularly hot air, said initial powder material preferably being transported in co-current and heated by said hot gas in the form of a fluidised bed.

8. Process according to claim 7, **characterised in that** the heating step a) is done using an annular thermal flash device comprising a hot air drying column in which the hot air can transport and heat said powder material in co-current along a helical ramp.

9. Process according to one of claims 1 to 6, **characterised in that** the two steps a) and b) are made in the same reaction vessel, preferably with a double skin.

10. Hydraulic binder comprising stabilised anhydrite III obtained by the process according to one of claims 1 to 9.

11. Hydraulic binder according to claim 10, **characterised in that** it comprises more than 95% or even more than 98% of stabilised anhydrite III by weight.

12. Hydraulic binder according to either claim 10 or 11, **characterised in that** it also comprises mineral filler additives chosen from among slags, fly ash, pozzolan, silica fumes, calcium and lime fines and industrial byproducts and mineral or organic waste.

13. Material formulated from a binder according to one of claims 10 to 12, preferably in the form of concrete, mortar, rendering or grout.

## Patentansprüche

1. Verfahren zur Herstellung eines stabilisierten Anhydrits III von Kalziumsulfat, bei dem die nachfolgend beschriebenen aufeinander folgenden Schritte durchgeführt werden:
a) Aufheizen eines pulverförmigen Ausgangsstoffes auf eine Temperatur im Bereich zwischen 220°C und 320°C, so daß ein löslicher Anhydrit III erzeugt wird, und
b) der besagte auf diese Weise umgewandelte Ausgangsstoff einer thermischen Behandlung unterzogen wird, bei der seine Temperatur um mindestens 150 °C gesenkt wird, so daß eine Temperatur von zumindest unterhalb von 100°C, vorzugsweise unterhalb von 80°C, in weniger als 2 Minuten, vorzugsweise in weniger als 20 Sekunden, erreicht wird in der Art, daß man besagten stabilisierten Anhydrit III erhält.
Das Verfahren ist **dadurch gekennzeichnet daß** der besagte pulverförmige Ausgangsstoff zu einer Körnungsgröße unterhalb von 200µm und vorzugsweise unterhalb von 150µm zermahlen wird und überwiegend Halbhydrat von Kalziumsulfat enthält.

2. Verfahren nach Anspruch1, **dadurch gekennzeichnet, daß** der besagte pulverförmige zermahlene Ausgangsstoff aus β-Gips besteht, der vorzugsweise mindestens 95% β-Halbhydrat von Kalziumsulfat enthält.

3. Verfahren nach Anspruch1, **dadurch gekennzeichnet, daß** der besagte pulverförmige zermahlene Ausgangsstoff aus einer Zusammensetzung aus β-Halbhydrat von Kalziumsulfat besteht.

4. Verfahren nach einem der verstehenden Ansprüche, **dadurch gekennzeichnet, daß** die Körnungsgröße des pulverförmigen Ausgangsstoffes homogenisiert in einem Bereich von 0 bis 100µm liegt.

5. Verfahren nach einem der Ansprüche 1 bis 4, **dadurch gekennzeichnet, daß** der pulverförmige Ausgangsstoff aus der thermischen Behandlung von natürlichem oder synthetischem Gips stammt und eine Ausgangstemperatur vor Schritt a) der Erhitzung besitzt zwischen 100 und 150°C, vorzugsweise zwischen 110 und 140°C.

6. Verfahren nach einem der Ansprüche 1 bis 4, **dadurch gekennzeichnet, daß** der pulverförmigen Ausgangsstoff eine Temperatur von weniger als 100°C hat, vorzugsweise Umgebungstemperatur.

7. Verfahren nach einem der Ansprüche 1 bis 6, **dadurch gekennzeichnet, daß** der Verfahrensschritt a) des Aufheizens durchgeführt wird durch direkten Kontakt mit einem heißen Gas, ins besonders heißer Luft, wobei vorzugsweise der besagte pulverförmige Ausgangsstoff in Strömungsrichtung bewegt wird und durch besagtes Gas in der Art eines Wirbelbettes erhitzt wird.

8. Verfahren nach Anspruche 7, **dadurch gekennzeichnet, daß** der Verfahrensschritt a) des Aufheizens durchgeführt wird mit Hilfe einer ringförmigen Vorrichtung zur thermischen Schockbehandlung die eine Heißlufttrocknungskolonne enthält in der die heiße Luft in der Lage ist den besagten pulverförmigen Stoff in Strömungsrichtung entlang einer spiralförmigen Rampe zu transportieren und aufzuheizen.

9. Verfahren nach einem der Ansprüche 1 bis 6, **gekennzeichnet dadurch, daß** die zwei Verfahrensschritte a) und b) in einem gemeinsamen Reaktor durchgeführt werden, der vorzugsweise doppelwandig ist.

10. Hydraulisches Bindemittel, das einen stabilisierten Anhydrit III enthält, der nach einem Verfahren der Ansprüche 1 bis 9 hergestellt wurde.

11. Hydraulisches Bindemittel nach Anspruch 10, **dadurch gekennzeichnet, daß** er mehr als 95% oder eher 98% stabilisierten Anhydrit III Gewichtsanteil enthält.

12. Hydraulisches Bindemittel nach einem der Ansprüche 10 bis 11, **dadurch gekennzeichnet, daß** er unter anderem Zusätze mineralischer Füllstoffe enthält die sich wählen lassen aus Schlacke, Flugasche, Puzzolan, Silikatstaub, feinem Kalkstein und Kalk sowie Nebenprodukten und industriellen Abfällen mineralischer oder organischer Natur.

13. Material dessen Zusammensetzung aufbaut auf einem Bindemittel nach einem der Ansprüche 10 bis 12, vorzugsweise in der Form von Beton, Mörtel, Putz oder Anstrich.
